## Europäisches Patentamt

## European Patent Office

## Office européen des brevets

(19)

(11) Veröffentlichungsnummer: **0 264 801**
**B1**

(12) **EUROPÄISCHE PATENTSCHRIFT**

(45) Veröffentlichungstag der Patentschrift:
06.12.89

(51) Int. Cl.⁴: **G01B 5/00**

(21) Anmeldenummer: 87114991.0

(22) Anmeldetag: 14.10.87

(54) Halterung für Mass- und Formverkörperungen.

(30) Priorität: **18.10.86 DE 3635511**

(43) Veröffentlichungstag der Anmeldung:
**27.04.88 Patentblatt 88/17**

(45) Bekanntmachung des Hinweises auf die Patenterteilung:
**06.12.89 Patentblatt 89/49**

(84) Benannte Vertragsstaaten:
**DE GB SE**

(56) Entgegenhaltungen:
**CH-A- 425 247**
**DE-A- 3 444 953**

(73) Patentinhaber: **Firma Carl Zeiss, D-7920 Heidenheim (Brenz)(DE)**

(84) Benannte Vertragsstaaten: **DE SE**

(73) Patentinhaber: **CARL-ZEISS-STIFTUNG trading as CARL ZEISS, D-7920 Heidenheim (Brenz)(DE)**

(84) Benannte Vertragsstaaten: **GB**

(72) Erfinder: **Lüdicke, Frank, Dr., Gassnerstrasse 12, D-3300 Braunschweig(DE)**

**Beschreibung**

Die unter anderem in Koordinatenmeßmaschinen oder Bearbeitungsmaschinen benutzten Längenmeßeinrichtungen besitzen in der Regel einen Glasmaßstab, auf dem die von einem photoelektrischen Gebersystem abgetastete Maßstabsteilung aufgebracht ist. In letzter Zeit ist auch ein Maßstab bekannt geworden, der neben der eigentlichen Maßstabsteilung eine Geradheitsmaßverkörperung in Form von mehreren parallelen, sich in Längsrichtung des Maßstabes erstreckenden Linien besitzt. Hierzu wird auf die EP-A 1-00 82 441 sowie die ältere Anmeldung mit dem Aktenzeichen DE-P 35 42 514.8 verwiesen.

Da die Linien der Geradheitsmaßverkörperung auf dem vorstehend genannten Maßstab dazu dienen, die Führungsfehler der Meß- bzw. Bearbeitungsmaschine zu erfassen, werden an die Formbeständigkeit ihres Trägers, d.h. des Maßstabs, hohe Anforderungen gestellt. Besondere Probleme bereiten hier Verformungen des Maßstabs aufgrund von Querkräften, die aus der unterschiedlichen thermischen Längenausdehnung des Maßstabes und seiner Fassung bzw. Halterung und der Art und Weise seiner Befestigung entstehen.

Es ist bereits bekannt, zur Vermeidung von thermischen Spannungen einen Maßstab auf seinem Träger mit Hilfe einer elastischen Klebeschicht zu befestigen wie dies in der DE-OS 25 05 587 beschrieben ist. Weiterhin ist vorgeschlagen worden, anstelle der durchgängigen elastischen Klebeschicht mehrere, durch Zwischenräume unterbrochene Gummistücke zu verwenden, auf die der Maßstab aufgespannt wird und die für einen Ausgleich der thermischen Spannung zwischen Maßstab und Fassung sorgen sollen. Auch bei dieser, z.B. in der DE-OS 33 12 534 und der US-PS 45 69 137 beschriebenen Art der Befestigung verbleiben jedoch Restkräfte in einer Größenordnung, die den Maßstab in einem nicht tolerierbaren Ausmaß verformen. Nachteilig ist hier vor allem, daß der Maßstab auch nach einem Temperaturausgleich nicht wieder reproduzierbar in seine Ausgangslage zurückkehrt, sondern auf Grund von Reibungskräften eine undefinierte neue Lage einnimmt. Als Folge von länger andauernden Zwangskräften sind auch Verformungen beobachtet worden, die sich als Fließen des Maßstabsmaterials Glas deuten lassen. All dies kann zu Meßfehlern sowohl bei der Positionsmessung in Längsrichtung des Maßstabs, in weit größerem Umfang jedoch für die an der Geradheitsmaßverkörperung abgenommenen Translationsmeßwerte führen.

Es ist die Aufgabe der vorliegenden Erfindung, eine Halterung für Maß- und Formverkörperungen wie z.B. den Maßstab in einer Längenmeßeinrichtung zu schaffen, in der der Maßstab so zwangsfrei wie möglich gehalten ist und thermisch bedingte Spannungen zwischen dem Maßstab und seiner Fassung vermieden sind.

Diese Aufgabe wird gemäß den im Kennzeichen des Hauptanspruches angegebenen Maßnahmen dadurch gelöst, daß die Maß- bzw. Formverkörperung auf in kleinen Bereichen rollbeweglich gehaltenen Kugeln aufgespannt ist.

Durch diese Art der Aufspannung sind die Maßverkörperung und ihre Fassung mechanisch weitestgehend voneinander entkoppelt. Die Maß- bzw. Formverkörperung kann sich bei Temperaturänderungen kräftefrei gegenüber seiner Fassung bewegen und bleibende Verformungen in Folge thermischer Einwirkung treten deshalb nicht auf.

Maß- und Formverkörperungen wie z.B. Maßstäbe oder Lineale besitzen in der Regel eine quaderförmige Gestalt. Für eine sichere Befestigung unabhängig von der Einbaulage ist es daher zweckmäßig, sie nicht nur bezuglich ihrer Breitseite sondern auch mit ihrer Schmalseite an rollbeweglich gehaltene Kugeln anzulegen.

Die Aufspannung selbst erfolgt vorteilhaft mit Hilfe von Federn, deren Kraftwirkungslinien senkrecht zur Rollbewegung der Kugeln gerichtet sind und durch die Lagerkugeln hindurch gehen, damit keine Querkräfte durch die Aufspannung selber entstehen. Vorteilhaft ist außerdem, wenn die Federkraft mittelbar über ebenfalls rollbeweglich gehaltene Kugeln auf den Maßstab aufgebracht ist. Der Maßstab kann dann bei Längenänderungen frei zwischen den Kugeln abrollen, zwischen denen er eingespannt ist, wenn dafür gesorgt ist, daß die Flächen zwischen denen die Kugeln eingespannt sind, ausreichend parallel sind.

Wegen der in der Praxis doch relativ geringen Längenänderungen zwischen Maßstab und Fassung reicht es aus, die Rollbeweglichkeit der Kugeln sicherzustellen, indem diese in weichelastisch nachgiebigen Aufnahmen wie z.B. in Gummilaschen, Filzringen oder anderen Kugelkäfigen mit elastisch nachgiebiger Wandung gehalten sind. Derartige Aufnahmen stellen sicher, daß die Kugeln in den vorbestimmten Lagerstellen festgehalten sind, und erleichtern die Montage des Maßstabes erheblich.

Die Lagerstelle selbst und deren Anzahl werden zweckmäßig abhängig von der Elastizität, d.h. im wesentlichen abhängig von Länge und Dicke des Maßstabs gewählt. Für kurze Maßstäbe ist auch bei waagerechter Einbaulage eine Lagerung in den beiden Besselpunkten ausreichend. Für größere Längen und insbesonders, wenn der Maßstab nur eine geringe Dicke aufweist, ist dagegen eine Halterung an mehr als zwei Stellen erforderlich, um ein Verformen des Maßstabs auf Grund seines Eigengewichts und einen zu großen Durchhang zu vermeiden. Ein Durchhang zwischen den Lagerstellen führt nämlich dazu, daß der Abstand zwischen dem Maßstab und dem ihn abtastenden Gebersystem schwankt, wodurch Meßfehler verursacht werden.

Wenn der Maßstab ausreichend eben ist, kann er direkt auf die Kugeln der Halterung aufgelegt werden, wobei als Kugeln z.B. Stahlkugeln oder solche aus anderen harten Materialien wie z.B. Saphir oder Rubin Verwendung finden können. Fassungsseitig können die Kugeln auf gehärteten und polierten Stahleinsätzen oder z.B. direkt auf der aus Granit bestehenden Grundplatte der Meßeinrichtungen abrollen.

Weitere Vorteile der Erfindung ergeben sich aus der nachstehenden Beschreibung von Ausführungsbeispielen an Hand der Figuren 1 bis 8 der beigefügten Zeichnungen. Dabei sind

Fig. 1a bis 1c Prinzipsskizzen, die einen Maßstab mit seiner Fassung in drei verschiedenen Schnitten darstellen;

Fig. 2 eine Prinzipsskizze eines zur Aufnahme der Lagerkugeln aus Figur 1 verwendbaren Kugelkäfigs;

Fig. 3 eine perspektivische Darstellung einer anstelle des Kugelkäfigs aus Figur 2 verwendbaren Aufnahme für die Lagerkugeln;

Fig. 4 eine Schnittzeichnung eines zur Aufspannung des Maßstabs verwendbaren Lagerelementes;

Fig. 5 eine Schnittzeichnung eines zur seitlichen Anlage des Maßstabs verwendbaren Lagerelementes;

Fig. 6 eine detaillierte Zeichnung einer bevorzugten Ausführungsform der Halterung mit Maßstab in Aufsicht;

Fig. 7 eine Schnittdarstellung der Halterung mit Maßstab aus Figur 6 längs der Linie VII - VII in Figur 6;

Fig. 8 ein Diagramm, das die relative Änderung der Geradheitsmeßwerte des Maßstabs (101) aus Figur 6/7 zeigt;

Fig. 9 eine Schnittdarstellung einer im Vergleich zu Figur 7 modifizierten Halterung.

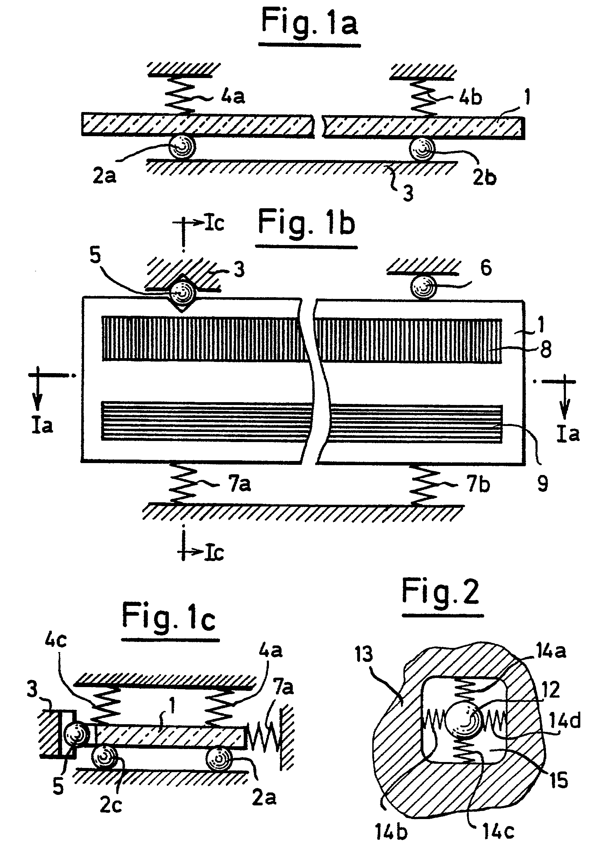

In Figur 1a bis 1c ist der zu befestigende Maßstab mit (1) bezeichnet. Der Maßstab (1) trägt an seiner Oberseite eine inkrementale Teilung (8) bestehend aus einem Strichgitter mit einer Periode von 16 µm. Die Teilung (8) ist die eigentliche Maßstabsteilung, die zur Positionsmessung in Längsrichtung des Maßstabs (1) von einem hier nicht dargestellten photoelektrischen Gebersystem abgetastet wird. Neben dieser eigentlichen Maßstabsteilung (8) ist auf der Oberseite des Maßstabs (1) eine Korrekturspur (9) in Form von mehreren parallelen, sich in Längsrichtung des Maßstabs (1) erstreckenden Linien aufgebracht. Die Korrekturspur (9) stellt eine Geradheitsmaßverkörperung dar und wird von einem zweiten, hier ebenfalls nicht dargestellten Gebersystem abgetastet.

Der Maßstab (1) liegt rollbeweglich über vier Kugeln (2a bis 2d) auf dem feststehenden Teil (3) in seiner Fassung auf. Um eine sichere Befestigung unabhängig von der Einbaulage zu gewährleisten, sind vier Federn (4a bis 4d) vorgesehen, mit deren Hilfe der Maßstab (1) gegen die Kugeln (2a bis 2d) gedrückt wird. Die Wirkungslinien der von den Federn (4a bis 4d) ausgeübten Kräfte sind so gelegt, daß sie senkrecht zur Oberfläche des Maßstabs (1) verlaufen und durch die Auflagepunkte hindurchgehen, damit keine Querkräfte infolge der Aufspannung selbst auf den Maßstab (1) ausgeübt werden.

Mit seiner Schmalseite ist der Maßstab (1) ebenfalls über Kugeln an die Seitenfläche der Fassung angelegt. Von den beiden in Figur 1 b dargestellten Kugeln (5) und (6) ist jedoch nur die eine Kugel (6) rollbeweglich zwischen Maßstab (1) und Fassung gehalten, die zweite Kugel (5) liegt in einander gegenüberliegenden Kerben in der Schmalseite des Maßstabs (1) und der Fassung. An dieser Stelle ist der Maßstab (1) bezüglich seiner Fassung festgehalten, kann aber bei unterschiedlicher Wärmeausdehnung zwischen Maßstabsmaterial und Fassung zwangsfrei auf der Kugel (6) sowie den Kugeln (2b bis 2d) an seiner Unterseite abrollen. Auch die Wirkunglinien der Federn (7a und 7b), mit deren Hilfe der Maßstab an die Kugeln (5 und 6) angelegt ist, gehen durch die Auflagepunkte.

Um die Auflagepunkte des Maßstabs (1) festzuhalten, die durch die Kugeln gebildet sind, gleichzeitig aber sicherzustellen, daß die Kugeln in ihrer Rollbeweglichkeit nicht behindert werden, sind die in Figur 2 mit (12) bezeichneten Kugeln in einem Kugelkäfig gehalten. Dieser Kugelkäfig besteht im einfachsten Falle aus einer Ausnehmung (15) im Fassungsteil (13), die so groß ist, daß die Kugel die zu erwartenden Bewegungen ausführen kann. Eine weichelastische Zentrierung der Kugel wird durch vier Federn (14a bis 14d) erreicht.

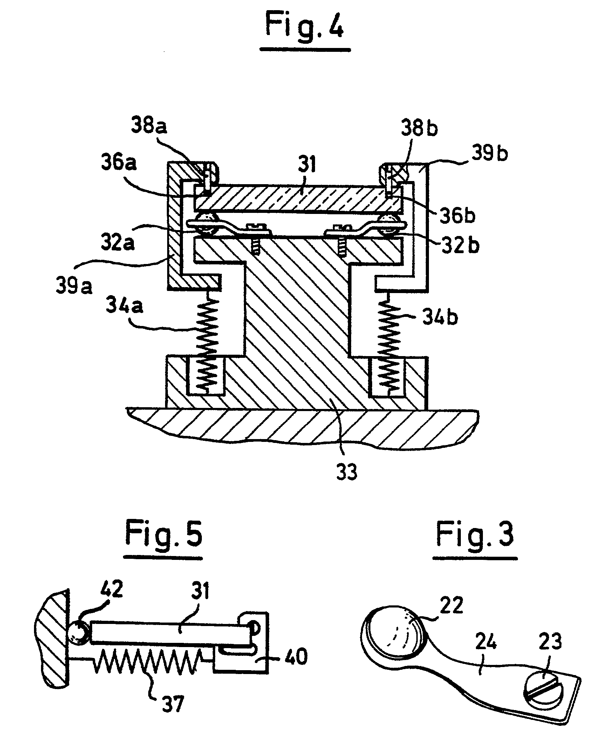

Bei den Darstellungen nach Figur 1a bis 1c und Figur 2 handelt es sich um schematische, vereinfachte Darstellungen, die gewählt wurden, um das Grundprinzip der erfindungsgemäßen Lagerung zu verdeutlichen. Es ist klar, daß bei der praktischen Ausführung Nebenbedingungen zu beachten sind, die zu einer etwas abweichenden Gestaltung führen. So ist es z.B. möglich, wie in Figur 3 dargestellt, zur nachgiebigen Aufnahme der Kugeln (22) statt eines Kugelkäfigs eine Gummilasche (24) zu verwenden, die aus elastischem Material ausgeschnitten oder ausgestanzt ist und mit Hilfe einer Schraube (23) am Fassungsteil befestigt ist.

Weiterhin ist es möglich, den Maßstab auf die Kugeln an seiner Unterseite und seiner Schmalseite jeweils mit Hilfe von Zugfedern (34) bzw. (37) aufzuspannen, wie dies in Figur 4 und 5 dargestellt ist. Hierzu sind Lagerböcke (33) vorgesehen, auf denen der Maßstab (31) über die Kugeln (32a und 32b) aufliegt. Über den Auflagepunkten sind in die Oberseite des Maßstabs (31) Bohrungen (36a und 36b) eingebracht und in diese Bohrungen (36) greifen Stifte (38a und 38b) zweier links und rechts über den Maßstab hinweggreifenden Bügel (39a und 39b) ein, an deren unteren Ende die Zugfedern (34a und 34b) eingehängt sind.

Bei dieser Art der Aufspannung wird das Abtasten der Meßteilung an der Oberseite des Maßstabs (31) nicht behindert, außerdem ist sichergestellt, daß sich der Kraftangriffpunkt der Federn (34) nicht verschieben kann. Zur Lagerung des Maßstabs (31) sind mindestens zwei der in Figur 4 dargestellten Lagerböcke zu verwenden.

Für das seitliche Anfedern des Maßstabs (31) an die Kugel (42) mittels Zugfedern (37) kann die in Figur 5 gezeigte Lösung verwendet werden. Hier sorgt ein Klammer (40), die den Maßstab (31) an der Oberseite etwas übergreift dafür, daß sich der Angriffspunkt der von der Feder (37) ausgeübten Kraft nicht verschiebt.

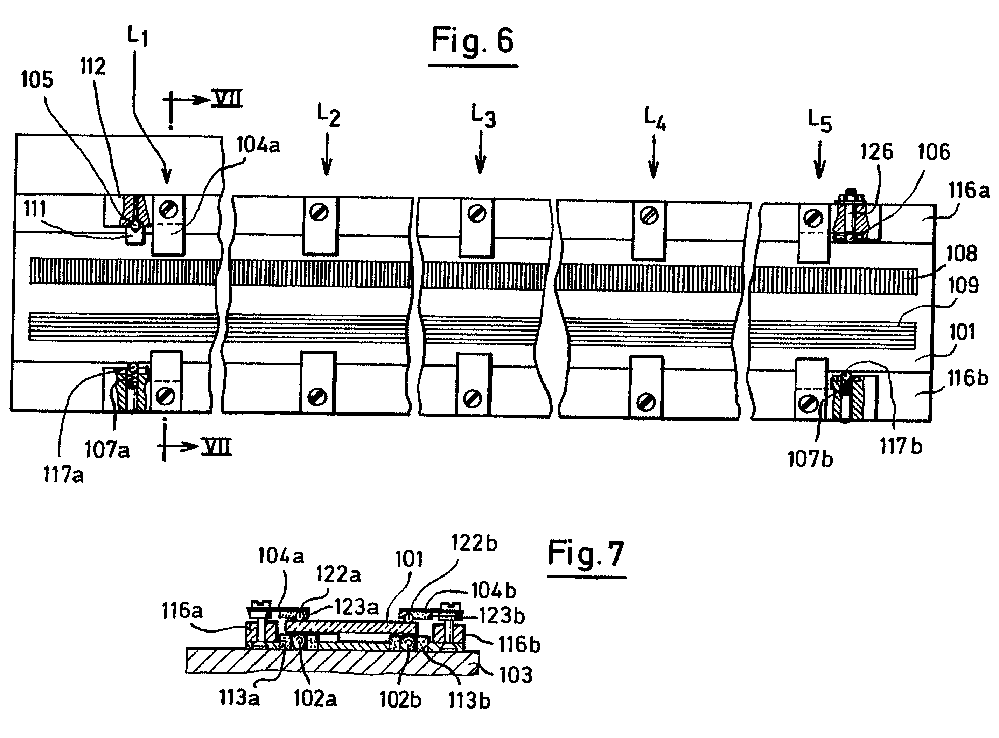

In den Figuren 6 und 7 ist ein unter dem Gesichtspunkt eines möglichst geringen technischen Aufwandes und einfacher Montage besonders vorteilhaftes Ausführungsbeispiel für eine mechanisch entkoppelte Befestigung des dort mit (101) bezeichneten Maßstabs am Maschinenbett eines Mehrkoordinatenmessgerätes dargestellt. Auch der Maßstab (101) trägt neben der eigentlichen Maßstabsteilung (108) zusätzlich eine Korrekturspur (109) als Geradheitsmaßverkörperung.

Der Maßstab (101) wird an fünf Stellen, die in Figur 6 mit L₁ bis L₅ bezeichnet sind, von einandergegenüber liegenden Blattfederpaaren (104a und 104b) auf die Lagerkugeln (102a und 102b) gedrückt. Die Lagerkugeln liegen direkt auf dem Granittisch (103) des Koordinatenmeßgerätes auf und werden von nachgiebigen Filzringen (113a und 113b) in Position gehalten. Die Filzringe übernehmen hier die Rolle des in Figur 2 skizzierten Kugelkäfigs, d.h. in den Filzringen sind die Kugeln (102) allseitig rollbeweglich gehalten.

Die Kraft, mit der die Blattfedern (104a und 104b) den Maßstab (101) andrücken, wird mittelbar über Kugeln (122a und 122b) zwischen den Blattfedern (104) und der Oberseite des Maßstabs (101) übertragen. Auch die Kugeln (122) sind in Kugelkäfigen in Form von Filzringen (123a und 123b) gefaßt. Bei Längendifferenzen bzw. Formänderungen zwischen Maßstab (101) und der Granit platte (103) kann der Maßstab (101) deshalb frei zwischen den Kugeln (102 und 122) hindurchrollen und kehrt immer wieder zwangsfrei in seine Ruhelage zurück, da er allein Rollreibung zu überwinden hat.

Wie vorstehend beschrieben, liegt der Maßstab (101) mit seiner Unterseite auf fünf Lagerstellen (L₁ bis L₅) auf, um einen zu großen Durchhang und Verformungen auf Grund seines Eigengewichtes zu vermeiden. Das seitliche Lager, gegen das der Maßstab (101) mit seiner Schmalseite angelegt ist, wird von zwei Kugeln (105 und 106) gebildet. Die Kugel (105) liegt in einer V-Nut in einer sich parallel zum Maßstab (101) erstreckenden Leiste (116a) der Maßstabsfassung. An der Kugel (105) liegt der Maßstab (101) mit einem ebenfalls mit einer V-Nut versehenen, an den Maßstab (101) angeklebten Fixierstück (111) an. Die Andruckkraft wird von einer Feder (107a) in eine Leiste (116b) mittels einer weiteren Kugel (117a) von der gegenüberliegenden Seite aus auf den Maßstab aufgebracht. An dieser Stelle ist der Maßstab also lagemäßig gegenüber seiner Fassung fixiert.

Am andern Ende des Maßstabs (101) drückt eine zweite Feder (107b) über die Kugel (117b) den Maßstab gegen den von einer Kugel (106) gebildeten seitlichen Anschlag. Die Kugel (106) ist wie auch die übrigen Kugeln (107a und 107b) ebenfalls rollbeweglich in einem Filzring gehalten und liegt an der polierten Stirnseite eines in der Tiefe verstellbaren Einsatzstiftes (126) an, auf dem sie nahezu reibungsfrei abrollen kann.

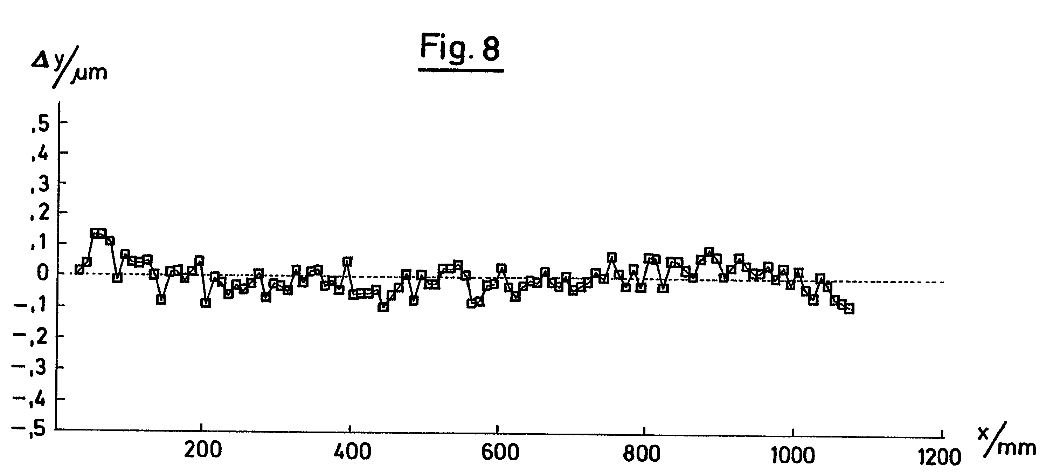

In der dargestellten Halterung ist der Maßstab sehr langzeitstabil und reproduzierbar befestigt. Messungen haben ergeben, daß die von der Korrekturspur (109) gelieferten Geradheitsmeßwerte auch nach mehreren Wochen und zwischenzeitlicher thermischer Belastung des Maßstabs weniger als 0,2 μm voneinander abwichen. Das zugehörige Meßdiagramm ist in Figur 8 dargestellt. Dort ist mit Δ y die relative Änderung der Geradheitsmeßwerte zweier im Abstand vom vier Wochen durchgeführter Messungen bezeichnet und gegen die Maßstabslänge x aufgetragen. Die Abweichungen bleiben unter 0,2 μm.

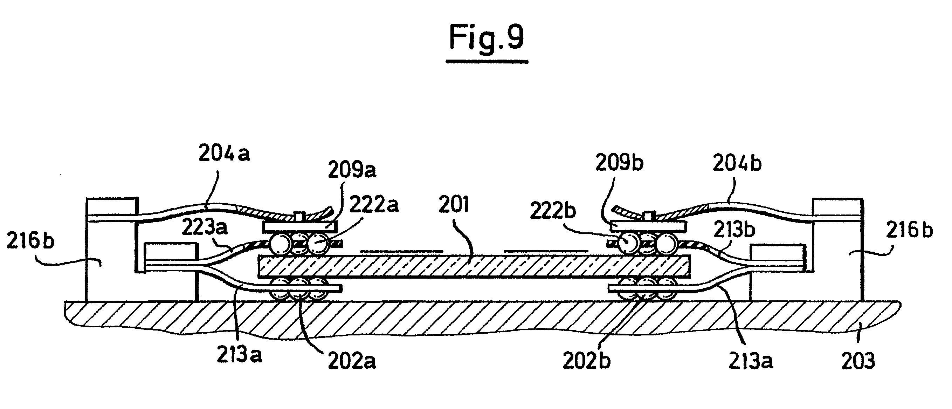

Bei der in Figur 6 und 7 dargestellten Halterung müssen die Flächen, zwischen denen die Kugeln (102 und 122) abrollen, möglichst eben und parallel zueinander sein, damit keine Zwangskräfte in der Aufspannebene entstehen. Außerdem muß durch die Filzringe (113 und 123) gewährleistet sein, daß die gegenüberliegenden Kugelpaare (z.B. 113a/123a) nicht in Maßstabsrichtung versetzt sind. Die Erfüllung dieser Forderungen kann bei Anwendungen, die eine besonders hohe Präzision verlangen, Probleme bereiten. Es ist dann zweckmäßig, wie in Figur 9 dargestellt an den Auflagepunkten für den Maßstab (201) statt Einzelkugeln jeweils ein Kugeltripel (202a und 202b) einzusetzen, das von einer gelochten Gummilasche (213a bzw. 213) an dieser Position gehalten wird. Auch zur Übertragung der Andruckkräfte der beidseitig des Maßstabs angeordneten Blattfedern (204a und 204b) wird jeweils ein in einer Gummilasche (223a und 223b) gehaltenes Kugeltripel (222a und 222b) anstelle der Einzelkugel verwendet. Außerdem sind zwischen den Blattfedern (204a,b) und den Kugeltripeln (222a,b) jeweils Andruckplatten (209a bzw. 209b) angeordnet, von denen die punktförmig in sie eingeleitete Andruckkraft auf die drei Kugeln des Tripels verteilt wird. Diese Andruckplatten sind an ihrer Unterseite leicht kalottenförmig ausgeführt. Dadurch stellt sich in Querrichtung eine stabile Ruhelage für die Kugeln (222a,b) ein, weil sich die Federkraft beim Abrollen der Kugeln geringfügig erhöht.

Die Federn (204a,b) und die Gummilaschen (223a,b und 213a,b) sind zusammen an zwei Leisten (216a und 216b) beidseits des Maßstabs (201) am Granittisch (203) eines Längenmeßgerätes (203) befestigt.

Die erfindungsgemäße Halterung ist nicht allein für die Befestigung von Maßstäben des in den Figuren beschriebenen Typs geeignet, sondern kann überall dort eingesetzt werden, wo es auf die reproduzierbare Befestigung von Maß- oder Formverkörperungen, z.B. Maßstäbe oder Lineale, ankommt.

## Patentansprüche

1. Halterung für Maß- und Formverkörperungen, dadurch gekennzeichnet, daß die Maß- bzw. Formverkörperung (1;31; 101;201) auf in kleinen Bereichen rollbeweglich gehaltenen Kugeln (2,6; 32,42;102, 106;202) aufgespannt ist.

2. Halterung nach Anspruch 1, dadurch gekennzeichnet, daß die Maß- bzw. Formverkörperung ein Maßstab (1;31;101;201) in einer Längenmeßeinrichtung ist.

3. Halterung nach Anspruch 2, dadurch gekennzeichnet, daß der Maßstab eine Geradheitsmaßverkörperung in Form mehrerer, sich in Längsrichtung des Maßstabs erstreckender Linien (Korrekturspur 9;109) trägt.

4. Halterung nach Anspruch 2, dadurch gekennzeichnet, daß der Maßstab (1;31;101) an zwei Seiten auf bzw. an Kugeln anliegt, die eine Längsführung für den Maßstab (1;31;101;201) bilden, und an einer Stelle (5;105) gegenüber seiner Fassung fixiert ist.

5. Halterung nach Anspruch 2, dadurch gekennzeichnet, daß der Maßstab (1;31;101;202) mittels Federn (4,7;34,37;104,107;204) auf die Kugeln aufgespannt ist.

6. Halterung nach Anspruch 5, dadurch gekennzeichnet, daß die Aufspannung des Maßstabs querkraftfrei vorgenommen ist, indem die Lagerkugeln (2;32;102) auf den zur Rollbewegung senkrechten Wirkungslinien der Federn (4;34;104) liegen.

7. Halterung nach Anspruch 5, dadurch gekennzeichnet, daß die Federkräfte mittelbar über ebenfalls rollbeweglich gehaltene Kugeln (122;222) auf den Maßstab (101;201) aufgebracht sind.

8. Halterung nach einem der Ansprüche 1 bis 7, dadurch gekennzeichnet, daß die Kugeln allseitig rollbeweglich in einer weichelastisch nachgiebigen Aufnahme (Gummilasche 24;213;223; Kugelkäfig 14/15, Filzring 113) gehalten sind.

9. Halterung nach einem der Ansprüche 1 bis 8, dadurch gekennzeichnet, daß die Federn Blattfedern (104;204) sind.

10. Halterung nach einem der Ansprüche 1 bis 8, dadurch gekennzeichnet, daß der Maßstab (101) über seine Länge an mehreren Stellen (L₁-L₅)auf den Kugeln (102) gelagert ist.

11. Halterung nach Anspruch 1, dadurch gekennzeichnet, daß der Maßstab aus Glas- oder Keramikmaterial besteht und direkt auf den Kugeln (2;102;202) aufliegt.

12. Halterung nach Anspruch 1, dadurch gekennzeichnet, daß die Maß- bzw. Formverkörperung ein Lineal ist.

## Claims

1. A mounting for scales, profile gauges or the like, characterized by the fact that the scale or profile gauge (1; 31; 101; 201) is clamped on balls (2, 6; 32, 42; 102, 202) which are rollably retained within small regions.

2. A mounting according to claim 1, characterized by the fact that the scale or profile gauge is the scale (1; 31; 101; 201) in a length-measuring device.

3. A mounting according to claim 2, characterized by the fact the scale carries linearity-measuring indicia in the form of several lines extending in the lengthwise direction of the scale (correction track 9; 109).

4. A mounting according to claim 2, characterized by the fact that the scale (1; 31; 101) is supported near each of its two longitudinal sides on or against balls which form a lengthwise guide for the scale (1; 31; 101; 201), and that said scale is fixed with respect to its holder at one point (5; 105).

5. A mounting according to claim 2, characterized by the fact that the scale (1; 31; 101; 202) is clamped on the balls by means of springs (4, 7; 34, 37; 104, 107; 204).

6. A mounting according to claim 5, characterized by the fact that the scale is clamped free of transverse forces in the manner that the bearing balls (2; 32; 102) lie on the lines of action of the springs (4; 34; 104) and perpendicular to the rolling motion.

7. A mounting according to claim 5, characterized by the fact that the spring forces are applied to the scale (101; 201) indirectly via balls (122; 222) which are also rollably retained.

8. A mounting according to one of claims 1 to 7, characterized by the fact that the balls are rollably held from all sides in a soft-elastic resilient holding means (rubber strap 24; 213; 223; ball cage 14/15, felt ring 113).

9. A mounting according to one of claims 1 to 8, characterized by the fact that the springs are leaf springs (104; 204).

10. A mounting according to one of claims 1 to 8, characterized by the fact that the scale (101) is supported on the balls (102) at several points (L₁-L₅) along its length.

11. A mounting according to claim 1, characterized by the fact that the scale consists of glass or ceramic and rests directly on the balls (2; 102; 202).

12. A mounting according to claim 1, characterized by the fact that the scale or profile gauge is a straightedge.

## Revendications

1. Fixation d'étalons de forme ou de mesure, caractérisée en ce que l'étalon en question (1; 31; 101; 201) est bridé sur des billes (2; 6; 32; 42; 102; 106; 202) qui sont mobiles par roulement sur une surface de faible étendue.

2. Fixation selon la revendication 1, caractérisé en ce que l'étalon en question est une échelle (1; 31; 101; 201) entrant dans la composition d'un dispositif de mesure de longueurs.

3. Fixation selon la revendication 2, caractérisée en ce que l'échelle est un étalon de linéarité qui se présente sous forme de plusieurs lignes droites disposées dans le sens longitudinal de l'échelle (trame de correction 9; 109).

4. Fixation selon la revendication 2, caractérisée en ce que l'échelle (1; 31; 101) est en contact, sur deux de ses faces, avec des billes assurant le guidage longitudinal de ladite échelle (1; 31; 101; 201), et en ce qu'elle est fixée en un point (5; 105) qui se trouve en face de sa monture.

5. Fixation selon la revendication 2, caractérisé en ce que l'échelle (1; 31; 101; 201), est bridé sur les billes au moyen de ressorts (4; 7; 34; 37; 104; 107; 204).

6. Fixation selon la revendication 5, caractérisé en ce que le bridage de l'échelle est exempt de tractions transversales, les billes porte-échelle (2; 32; 102) étant disposées sur les lignes de la traction exercée par les ressorts (4; 34; 104) dans un sens perpendiculaire à celui du roulement des billes.

7. Fixation selon la revendication 5, caractérisée en ce que la traction des ressorts s'applique à l'échelle (101; 201) par l'intermédiaire des billes (122; 222) qui sont également mobiles par roulement.

8. Fixation selon l'une quelconque des revendications 1 à 7, caractérisée en ce que les billes sont placées dans un support mou et élastique (languette en caoutchouc 24; 213; 223, cage à bille 14/15, bague en feutre 113) autorisant un déplacement dans tous les sens.

9. Fixation selon l'une quelconque des revendications 1 à 8, caractérisée en ce que les ressorts en question sont des ressorts à lames (104; 204).

10. Fixation selon l'une quelconque des revendications 1 à 8, caractérisée en ce que l'échelle (101) prend appui, sur toute sa longueur, sur des billes (102) disposées en plusieurs points (L₁–L₅).

11. Fixation selon la revendication 1, caractérisée en ce que l'échelle est en verre ou en céramique et en ce qu'elle repose directement sur les billes (2; 102; 202).

12. Fixation selon la revendication 1, caractérisée en ce que l'étalon est une régle.

# Fig. 1a

# Fig. 1b

# Fig. 1c

# Fig. 2

# Fig. 4

# Fig. 5

# Fig. 3

## Fig. 6

## Fig. 7

EP 0 264 801 B1

## Fig. 8

# Fig.9

EP 0 264 801 B1